# EUROPÄISCHE PATENTSCHRIFT

(11) **EP 3 488 118 B1**
(45) Veröffentlichungstag und Bekanntmachung des Hinweises auf die Patenterteilung: **08.07.2020**
(21) Anmeldenummer: 17722787.3
(22) Anmeldetag: 11.05.2017
(51) Int. Cl.: F16D 65/00, F16D 55/226

(54) **SCHUTZBLENDE SOWIE BREMSTRÄGER UND SCHWIMMSATTELBREMSE MIT EINER SOLCHEN SCHUTZBLENDE**
PROTECTIVE SHIELD AND BRAKE CARRIER, AND FLOATING CALIPER BRAKE HAVING SUCH A PROTECTIVE SHIELD
ÉCRAN DE PROTECTION AINSI QUE SUPPORT D'ÉTRIER ET FREIN À ÉTRIER FLOTTANT ÉQUIPÉS D'UN TEL ÉCRAN DE PROTECTION

(30) Priorität: 19.07.2016 DE 102016008794
(43) Veröffentlichungstag der Anmeldung: 29.05.2019
(73) Patentinhaber: Lucas Automotive GmbH, 56070 Koblenz (DE)
(72) Erfinder: ROESSINGER, Florian, 56566 Neuwied (DE)
(74) Vertreter: Schmidt, Steffen J.
(86) Internationale Anmeldenummer: PCT/EP2017/061277
(87) Internationale Veröffentlichungsnummer: WO 2018/015034

(56) Entgegenhaltungen:
- WO-A1-2007/131922
- DE-A1-102007 033 165
- DE-A1-102010 053 910

## Beschreibung

### Hintergrund

Hier werden eine Schutzblende sowie ein Bremsträger und eine Schwimmsattelbremse mit einer solchen Schutzblende vorgestellt.

### Stand der Technik

DE 10 2007 001 731 A1 offenbart eine Scheibenbremse mit einer Schutzblende, wobei die Schutzblende an einem fahrzeugfesten Halter mittels Schrauben angebracht ist und Federelemente zum Ausgleich von Verformungen des Halters aufweist.

DE 41 01 514 A1 offenbart eine Scheibenbremse mit einer Blende, die form- und/oder reibschlüssig an einem Bremssattel angebracht ist.

Weitere Scheibenbremsen mit einer an einem Bremssattel angebrachten Schutzblende sind aus der WO 2007/131922 A1 und der DE 10 2007 033 165 A1 bekannt.

Ferner offenbart DE 10 2010 053 910 A1 einen Kennzeichnungsträger zum Anbringen an einer Bremszange einer Schwimmsattelbremse.

### Zugrunde liegendes Problem

Ziel ist es, eine Schutzblende bereitzustellen, die einfach und kompakt in ihrem Aufbau sowie vielseitig einsetzbar ist.

### Lösung

Um dieses Ziel zu erreichen, wird hier eine Schutzblende mit den Merkmalen des unabhängigen Anspruchs vorgestellt.

Eine derartige Schutzblende hat einem Grundkörper und eine daran angeordnete Befestigungseinrichtung zum entfernbaren Anbringen an einen Bremsträger einer Schwimmsattelbremse, wobei die Befestigungseinrichtung mindestens drei Federelemente aufweist, von denen ein Federelement in einer anderen Auslenkebene auslenkbar ist als die anderen Federelemente und die Auslenkebenen in einem Winkel zueinander stehen, wobei die Federelemente senkrecht vom Grundkörperabstehen.

Die Auslenkebenen können auch zueinander senkrecht sein, wobei jedes der Federelemente in nur einer dieser Auslenkebenen auslenkbar ist, und wobei vorzugsweise die Auslenkebenen senkrecht zum Grundkörper sind.

Die Federelemente können symmetrisch zu einer Symmetrieebene des Grundkörpers angeordnet sein, wobei vorzugsweise der Grundkörper sich von einem ersten bogenförmigen Rand zu einem zweiten bogenförmigen Rand mit größerem Radius als der erste bogenförmige Rand bezüglich eines gemeinsamen Ursprungspunkts P erstreckt, und/oder wobei der Grundkörper als ringsegmentartige Scheibe in dieser Erstreckungsrichtung geformt ist.

Ein Federelement kann V-förmig ausgebildet sein, wobei es vorzugsweise mittig am Grundkörper angebracht ist, und/oder wobei vorzugsweise das V-förmiger Federelement nur an einem seiner Schenkel am Grundkörper angebracht ist, und/oder wobei vorzugsweise die mittig zwischen den Schenkeln des V-förmigen Federelements definierte Symmetrieachse in einer Ebene parallel zum unmittelbar angrenzenden Bereich des Grundkörpers verläuft, und/oder wobei vorzugsweise zumindest ein Schenkel des V-förmigen Federelements eine Rillierung und/oder Rändelung hat.

Zwei Federelemente können einander zugewandt sein, wobei vorzugsweise die Federelemente einen durch deren Auslenkung veränderlichen Aufnahmeabstand mit dem Grundkörper definieren, und/oder wobei vorzugsweise die Federelemente J-förmig mit einem am Grundkörper angebrachten geraden Grundabschnitt und einen sich daran anschließenden hackenförmigen Abschnitt ausgebildet sind, und/oder wobei vorzugsweise die Federelemente symmetrisch und in verschiedenen Abständen zur Symmetrieebene des Grundkörpers angeordnet sind, und/oder wobei vorzugsweise zumindest drei Federelemente voneinander verschieden ausgerichtet sind.

Ein Bremsträger für eine Schwimmsattelbremse kann eine der obigen Schutzblenden aufweisen, wobei der Bremsträger U-förmige Verbindungsstreben sowie zwei gerade Brückenstreben aufweist, wobei sich die Brückenstreben im Wesentlichen parallel zueinander sowie in einem rechten Winkel zu den Verbindungsstreben erstrecken und die beiden Enden der U-förmigen Verbindungsstreben verbinden, sodass beide Verbindungsstreben eine in eine erste Richtung geöffnete U-Form des Bremsträgers bilden und die beiden Verbindungsstreben zusammen mit den Brückenstreben eine in eine zweite Richtung geöffnete U-Form des Bremsträgers bilden, welche zur ersten Richtung entgegengesetzt ist, wobei die Schutzblende einseitig an dem Bremsträger senkrecht zur Haupterstreckungsrichtung der Brückenstreben verläuft und an einer der beiden Verbindungsstreben angebracht ist.

Dabei kann zumindest ein Federelement einen mittleren Abschnitt der Verbindungsstrebe umgreifen, wobei vorzugsweise das Federelement einen an der Verbindungsstrebe ausgebildeten Vorsprung umgreift, und/oder wobei vorzugsweise der Vorsprung in der ersten Richtung ausgebildet ist, und/oder wobei der Vorsprung komplementär zum Federelement geformt ist.

Dabei kann zumindest ein Federelement einen mittleren Abschnitt der Verbindungsstrebe von der zweiten Richtung umgreifen.

Zumindest ein Federelement die Verbindungsstrebe von einer Richtung umgreift, die in einer Ebene parallel zu einer zur Haupterstreckungsebene der Verbindungsstrebe verlaufenden Ebene liegt.

Eine Schwimmsattelbremse kann einen der obigen Bremsträger oder eine der obigen Schutzblenden aufweisen.

### Kurzbeschreibung der Figuren

Weitere Merkmale, Eigenschaften, Vorteile und mögliche Abwandlungen werden anhand der nachstehenden Beschreibung verdeutlicht, in der auf die beigefügten Zeichnungen Bezug genommen ist. Dabei haben gleiche Teile gleiche Bezugszeichen und ähnliche Teile ähnliche Bezugszeichen.

Die hier beschriebenen Varianten dienen lediglich dem besseren Verständnis der Struktur, Funktionsweise und Eigenschaften; sie schränken die Offenbarung nicht etwa auf die Ausführungsformen ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen offenbart sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst und können zu Gegenstand weiterer Ansprüche gemacht werden. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart. Dabei zeigen:
- Fig. 1-4: eine erste Ausführungsform einer Schutzblende mit dazugehörigem Bremsträger;
- Fig. 5-7: eine zweite Ausführungsform einer Schutzblende mit dazugehörigem Bremsträger;
- Fig. 8-15: eine dritte Ausführungsform einer Schutzblende mit dazugehörigem Bremsträger;
- Fig. 16-28: eine vierte Ausführungsform einer Schutzblende mit dazugehörigem Bremsträger; und
- Fig. 29-35: eine fünfte Ausführungsform einer Schutzblende mit dazugehörigem Bremsträger.

### Detaillierte Beschreibung der Figuren

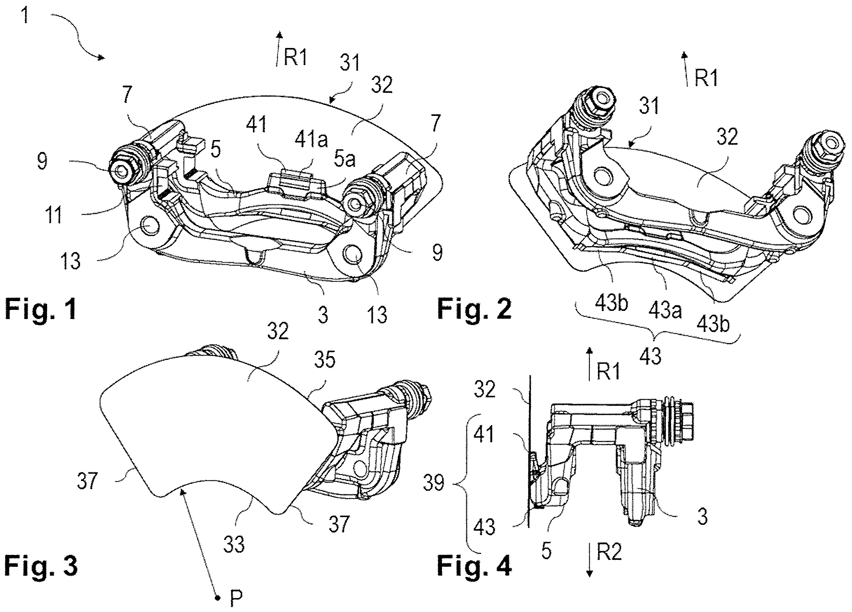

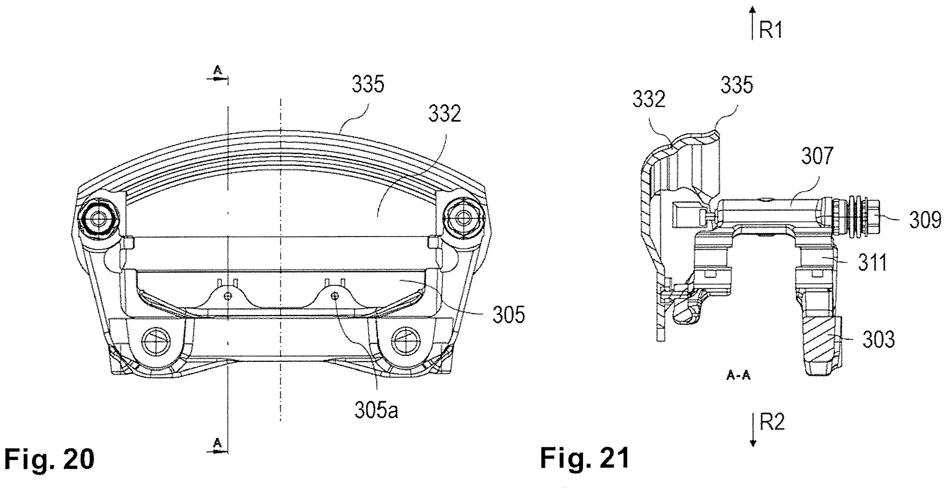

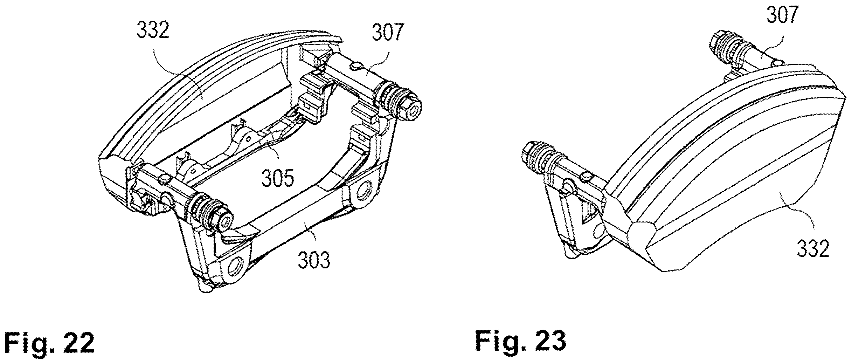

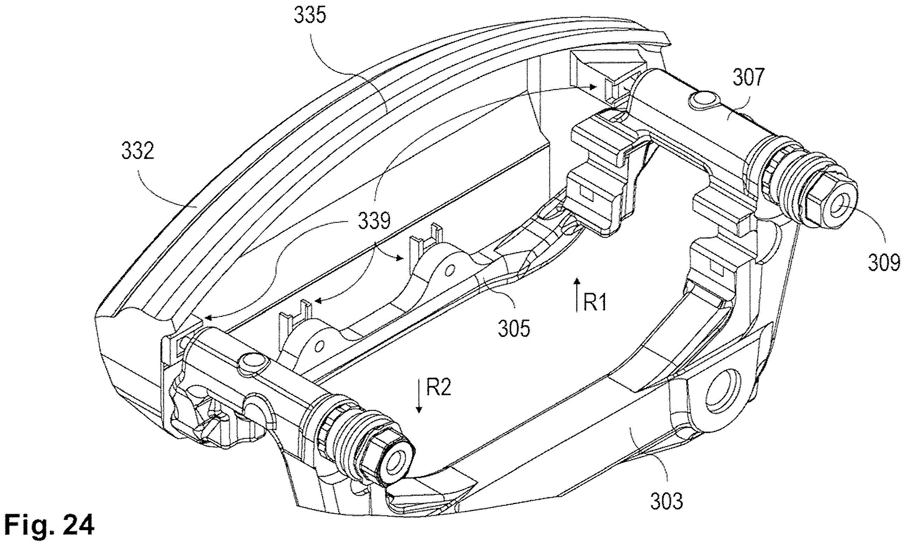

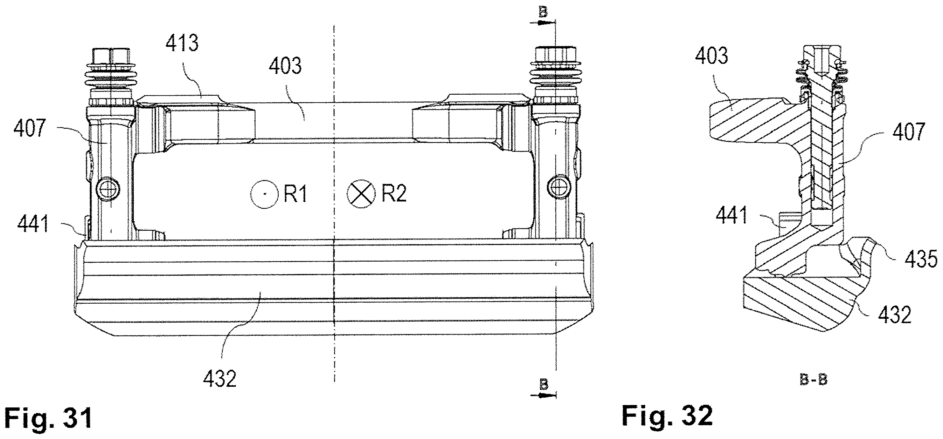

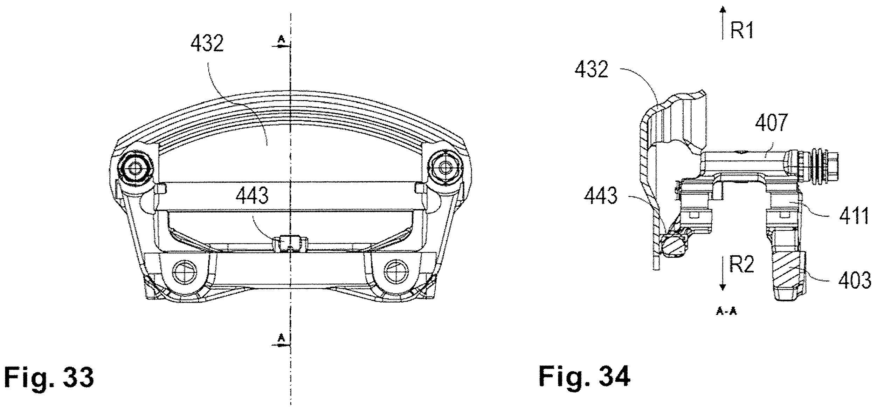

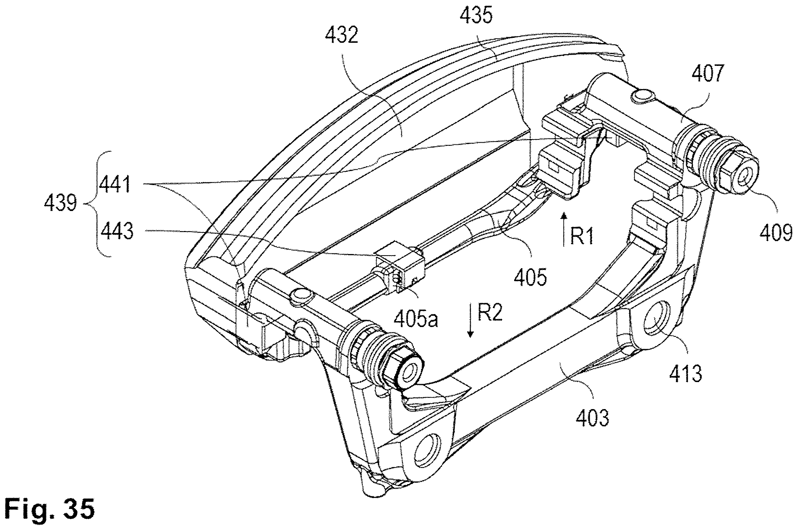

Fig. 1 bis 35 zeigen verschiedene Schutzblenden mit dazugehörigen Bremsträgern.

Ein Bremsträger 1 hat grundsätzlich zwei U-förmige Verbindungsstreben 3, 5 sowie zwei Brückenstreben 7, die bezüglich ihrer Haupterstreckungsrichtung im Wesentlichen gleich lang sind. Die Brückenstreben 7 erstrecken sich im Wesentlichen parallel zueinander zwischen den Verbindungsstreben 3, 5 und zwar in einem solchen Abstand, dass sie die beiden Enden der einen U-förmigen Verbindungsstrebe 3 mit den beiden Enden der anderen U-förmigen Verbindungsstrebe 5 verbinden, sodass beide Verbindungsstreben 3, 5 die in eine erste Richtung R1 geöffnete U-Form des Bremsträgers 1 bilden, siehe Fig. 1 und 2. Gleichzeitig bilden die beiden Verbindungsstreben 3, 5 zusammen mit den Brückenstreben 7 die in eine zweite Richtung R2 geöffnete U-Form des Bremsträgers 1, welche zur ersten Richtung R1 entgegengesetzt ist, siehe Fig. 4. Die Brückenstreben 7 haben jeweils eine zentral in ihrer Haupterstreckungsrichtung verlaufende Bohrung zur Aufnahme von entlang dieser Bohrung verschiebbaren Bremssattelführungen 9. Die Verbindungsstreben 3, 5 haben in den beiden aufsteigenden Abschnitten ihrer U-Form jeweils Bremsbelagführungsschächte 11, welche dazu eingerichtet sind, Bremsbeläge zu führen und deren Reaktionskräfte während einer Bremsung aufzunehmen und abzuleiten. An der ersten Verbindungsstrebe 3 befinden sich an den beiden Übergängen zu ihren aufsteigenden Abschnitten und auf einer der zweiten Verbindungsstrebe 5 entgegengesetzten Seite Befestigungsbohrungen 13 zur starren Verbindung des Bremsträgers 1 mit einer Fahrzeugachse.

### Erste Ausführungsform

Fig. 1 bis 4 zeigen eine erste Ausführungsform einer Schutzblende 31. Wie in Fig. 3 gezeigt, hat die Schutzblende 31 einen Grundkörper 32, der sich von einem ersten bogenförmigen Rand 33 zu einem zweiten bogenförmigen Rand 35 mit größerem Radius als der erste bogenförmige Rand 33 bezüglich eines gemeinsamen Ursprungspunkts P erstreckt. Seitenränder 37 verbinden den ersten 33 und den zweiten bogenförmigen Rand 35 und erstrecken sich dabei im Wesentlichen entlang einer jeweiligen Geraden durch den gemeinsamen Ursprungspunkt P, wobei die Übergänge zwischen den benachbarten Rändern 33, 35, 37 abgerundet sind, um Verletzungen bei der Handhabung der Schutzblende 31 vorzubeugen. Zudem begrenzen die Ränder 33, 35, 37 zwei entgegengesetzte ebene Seiten des Grundkörpers 32. Wie in Fig. 1, 2 und 4 gezeigt, ist an der einen Seite des Grundkörpers 32 eine Befestigungseinrichtung 39 vorhanden, die eine V-förmige Feder 41 sowie eine Blattfeder 43 hat.

Die V-förmige Feder 41 erstreckt sich entlang des Grundkörpers 32 in einer Richtung senkrecht und symmetrisch zu einer zwischen den Seitenrändern 37 des Grundkörpers 32 verlaufenden Mitte. Sie ist ausschließlich an einem ihrer beiden Schenkel an dem Grundkörper 32 befestigt, sodass ihre V-Form bedingte Öffnung, welche durch die beiden im spitzen Winkel zueinander ausgerichteten Schenkeln gebildet wird, zum ersten bogenförmigen Rand 33 zeigt, während ihre V-Form bedingte Spitze, welche ebenfalls durch die beiden Schenkeln gebildet wird, in die entgegengesetzte Richtung, d.h. zum zweiten bogenförmigen Rand 35, zeigt. An den beiden Schenkeln hat die V-förmige Feder 41 quer zur Erstreckung des jeweiligen Schenkels verlaufende Rippen 41a, um einen verbesserten Halt bei ihrer Verwendung zu bieten. An dem freien, der V-formbedingten Spitze entgegengesetzten Ende des anderen ihrer beiden Schenkel hat die V-förmige Feder 41 eine abstehende Lippe, welche zum manuellen Vorspannen bzw. Öffnen der V-förmigen Feder 41 dient.

Die Blattfeder 43 erstreckt sich entlang und senkrecht zum Grundkörper 32 in einer Richtung senkrecht und symmetrisch zu der zwischen den Seitenrändern 37 des Grundkörpers 32 verlaufenden Mitte. Dabei weist die Blattfeder 43 drei Bereiche 43a, 43b auf. Ein mittlerer, erster Bereich 43a, der mit einem mittleren Abschnitt an dem Grundkörper 32 befestigt ist. Von diesem mittleren Bereich 43a erstrecken sich beidseitig in Verlängerung jeweils ein Randbereich 43b. Dabei sind die Randbereiche 43b gegenüber dem mittleren Bereich 43a an den entsprechenden Übergangsbereichen federnd gelagert. Diese Randbereiche 43b weisen an ihren dem mittleren Bereich 43a gegenüberliegenden Enden jeweils eine federnde Wölbung auf, die in Richtung des zweiten bogenförmigen Rands 35 zeigt, wobei die Übergangsbereiche eine niedrigere Federsteifigkeit gegenüber einer vom zweiten bogenförmigen Rand 35 wirkenden Kraft an den äußeren Enden der Blattfeder 43 haben als die Wölbungen. Dadurch wird eine vorteilhafte Abstufung der Federsteifigkeit der Blattfeder 43 erreicht. Die Enden der Randbereiche 43b haben, auch falls keine solche Wölbung vorgesehen sein sollte, jeweils eine abstehende Lippe, welche zum manuellen Vorspannen bzw. Auslenken der Blattfeder 43 dient.

Die Befestigungseinrichtung 39 ist hier als einstückiges Blechteil ausgebildet, das an der einen ebenen Seite des Grundkörpers 32 befestigt ist. Alternativ kann die Befestigungseinrichtung 39 aus dem Grundkörper 32 geschnitten und gebogen sein, wodurch der Materialverschnitt minimiert wird. Die dadurch in dem Grundkörper 32 entstandenen Öffnungen können vorzugsweise durch Füllelemente geschlossen werden. Des Weiteren kann die hier vorgesehene unlösbare Befestigung der Befestigungseinrichtung 39 an dem Grundkörper 32 durch eine lösbare Befestigung ersetzt werden. Diese könnte vorteilhafterweise in eine zu den beiden Seitenrändern 37 gerichtete Richtung realisiert sein, sodass sie sich von den Wirkrichtungen der Befestigungseinrichtung 39 unterscheidet, um ein versehentliches Lösen der Befestigungseinrichtung 39 von dem Grundkörper 32 bei ihrer Verwendung zu verhindern. Eine solche lösbare Befestigung erlaubt den Austausch von verschlissenen Befestigungseinrichtungen 39 an noch einwandfreien Grundkörpern 32 und umgekehrt, sodass eine Reparatur und Instandhaltung der Schutzblende 31 einfach und kostengünstig erfolgen kann.

Obige Schutzblende 31 ist hier ausschließlich an der zweiten Verbindungsstrebe 5 des Bremsträgers 1 angebracht. Die Befestigungseinrichtung 39 ist dabei derart ausgebildet, dass die V-förmige Feder 41 einen in der ersten Richtung R1 vorstehenden Teil 5a als Befestigungsstruktur der zweiten Verbindungsstrebe 5 unter Vorspannung umgreift und gleichzeitig die Blattfeder 43 an ihren Enden gegen eine in der zweiten Richtung R2 gerichtete Unterseite der zweiten Verbindungsstrebe 5 an den beiden Übergängen vorspannt. Die V-förmige Feder 41 nimmt die zweite Verbindungsstrebe 5 unter Vorspannung in ihrer Öffnung auf, um eine Relativbewegung der Schutzblende 31 zum Bremsträger 1 in der zweiten Richtung R2 sowie in dazu senkrechte Richtungen von und zu der zweiten Verbindungsstrebe 5 entlang einer zur Erstreckungsrichtung der Brückenstreben 7 verlaufenden Parallelen zu verhindern. Dabei ist der vorstehende Teil 5a als Montagehilfe sinnvoll, aber nicht unbedingt erforderlich, da die V-förmige Feder 41 auch an der zweiten Verbindungsstrebe 5 aufsteckbar sein kann. Die Blattfeder 43 liegt lediglich unter Vorspannung auf der Unterseite der zweiten Verbindungsstrebe 5 auf, um eine Relativbewegung der Schutzblende 31 in die erste Richtung R1 sowie eine Rotation der Schutzblende 31 relativ zum Bremsträger 1 zu verhindern. Die elastische Vorspannung reduziert dabei besonders wirkungsvoll Haltekraftverluste durch Temperatureinwirkung.

Die Montage obiger Schutzblende 31 erfolgt dabei mit der V-förmigen Feder 41 beginnend, welche hier auf den vorstehenden Teil 5a der zweiten Verbindungsstrebe 5 aufgesteckt wird, und weiter mit dem manuellen Vorspannen bzw. Auslenken der Blattfeder 43, so dass deren Enden mit der Unterseite der zweiten Verbindungsstrebe 5 in Anlage gebracht werden können.

### Zweite Ausführungsform

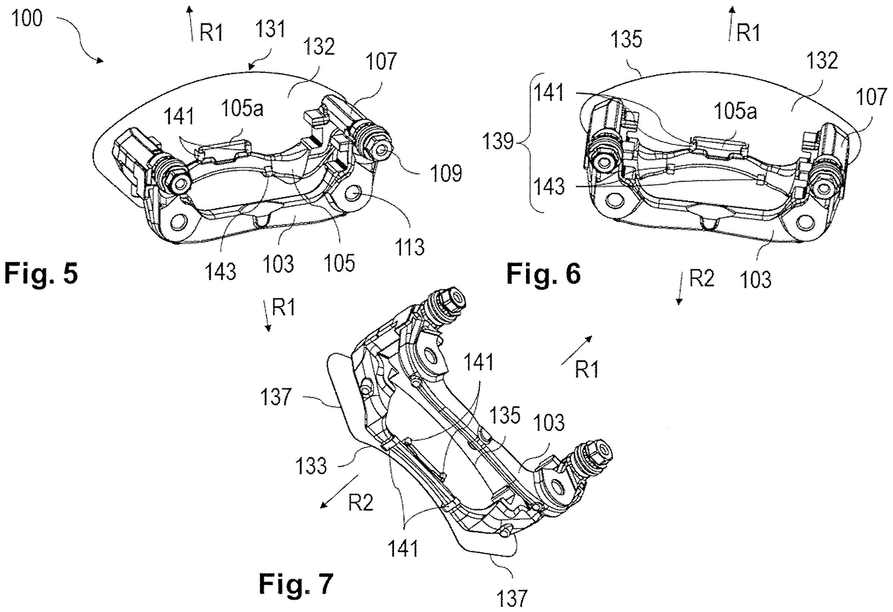

Fig. 5 bis 7 zeigen eine zweite Ausführungsform einer Schutzblende 131. Diese Schutzblende 131 unterscheidet sich von der Schutzblende 31 der ersten Ausführungsform lediglich bezüglich ihrer Befestigungseinrichtung 139, die vier J-förmige Befestigungsfedern 141, 143 hat, die formbedingt einen geraden Grundabschnitt sowie einen hakenförmigen Endabschnitt aufweisen. Diese Befestigungsfedern 141, 143 erstrecken sich senkrecht zu und von der einen Seite des Grundkörpers 132 der Schutzblende 131 symmetrisch zu einer zwischen den Seitenrändern 137 des Grundkörpers 132 verlaufenden Mitte. Dabei sind die oberen beiden Befestigungsfedern 141 parallel zueinander und näher am zweiten bogenförmigen Rand 135 als die unteren beiden Befestigungsfedern 143, die dem ersten bogenförmigen Rand 133 näher und parallel zueinander sind. Die oberen beiden Befestigungsfedern 141 sind mit ihrem hakenförmigen Endabschnitt einander zugewandt, während die unteren beiden Befestigungsfedern 143 gleichgerichtet und mit ihrem jeweiligen hakenförmigen Endabschnitt zum zweiten bogenförmigen Rand 135 gerichtet sind. Dabei sind die oberen beiden Befestigungsfedern 141 in einem kleineren Abstand zueinander angeordnet als die unteren beiden Befestigungsfedern 143.

Selbstverständlich können die Befestigungsfedern 141, 143 auch umgekehrt angeordnet und ausgerichtet sein, solange mindestens eine der Befestigungsfedern 141, 143 in eine andere Richtung ausgerichtet ist als die anderen Befestigungsfedern 141, 143. Des Weiteren können die Befestigungsfedern 141, 143 auch hier aus dem Grundkörper 132 ausgeschnitten und gebogen sein. Alternativ kann die Befestigungseinrichtung 139 einstückig aus Blech mit den Befestigungsfedern 141, 143 geformt sein.

Obige Schutzblende 131 ist auch hier ausschließlich an der zweiten Verbindungsstrebe 105 des Bremsträgers 100 angebracht. Die Befestigungseinrichtung 139 ist dabei derart ausgebildet, dass die oberen Befestigungsfedern 141 einen in der ersten Richtung R1 vorstehenden Teil 105a als Befestigungsstruktur der zweiten Verbindungsstrebe 105 unter Vorspannung umgreifen und gleichzeitig die unteren Befestigungsfedern 143 die in der zweiten Richtung R2 gerichtete Unterseite der zweiten Verbindungsstrebe 105 zwischen den beiden Übergängen und eine Mitte zwischen den Übergängen unter Vorspannung umgreifen. Dabei verhindern die oberen Befestigungsfedern 141 eine Relativbewegung der Schutzblende 131 zum Bremsträger 100 in der zweiten Richtung R2 sowie zusammen mit der einen Seite des Grundkörpers 132 in dazu senkrechte Richtungen von und zu der zweiten Verbindungsstrebe 105 entlang einer zur Erstreckungsrichtung der Brückenstreben 7 verlaufenden Parallelen. Die unteren Befestigungsfedern 143 verhindern indes eine Relativbewegung der Schutzblende 131 zum Bremsträger 100 in der ersten Richtung R1 sowie zusammen mit der einen Seite des Grundkörpers 132 in dazu senkrechte Richtungen von und zu der zweiten Verbindungsstrebe 105 entlang einer zur Erstreckungsrichtung der Brückenstreben 7 verlaufenden Parallelen. Dabei ist der vorstehende Teil 105a nicht unbedingt erforderlich, da die oberen Befestigungsfedern 141 auch an der zweiten Verbindungsstrebe 105 aufsteckbar sein können. Durch den seitlichen Eingriff der oberen Befestigungsfedern 141 wird zudem die notwendige Stabilität gegen ungewollte Rotation verbessert wodurch die unteren Befestigungsfedern 143 im Vergleich zu den Enden der Blattfeder 43 der ersten Ausführungsform näher zusammenrücken können. Insgesamt kann dabei mit einer geringeren Vorspannkraft gearbeitet werden, was insbesondere die Montage vereinfacht.

Die Montage obiger Schutzblende 131 erfolgt dabei mit den unteren Befestigungsfedern 143 beginnend, welche die Verbindungsstrebe 105 von ihrer Unterseite untergreifen, und weiter mit den oberen Befestigungsfedern 141, die auf den vorstehenden Teil 105a der zweiten Verbindungsstrebe 105 aufgesteckt werden. Selbstverständlich kann obige Schutzblende 131 auch in umgekehrter Reihenfolge montiert werden. Möglich ist auch, dass die Schutzblende 131 mit allen vier Befestigungsfedern 141, 143 gleichzeitig auf die zweite Verbindungsstrebe 105 aufgesteckt wird, was die Montage gegenüber der ersten Ausführungsform vereinfacht.

### Dritte Ausführungsform

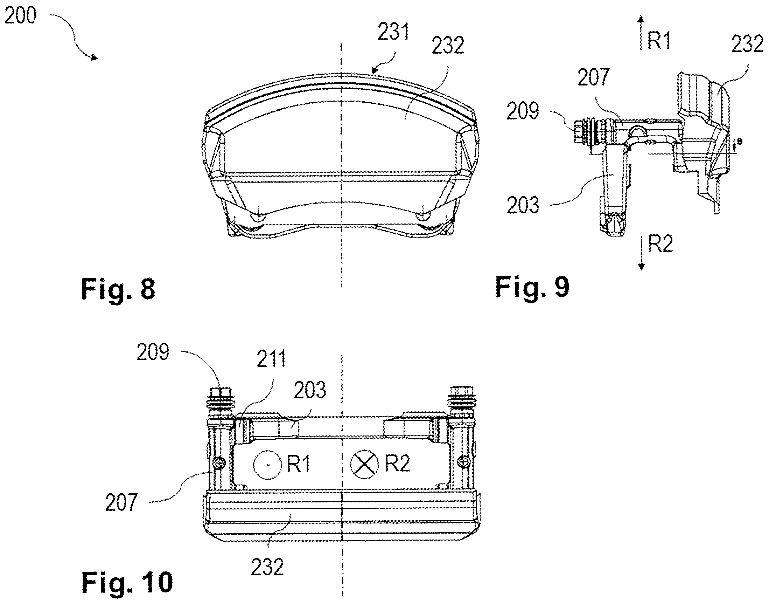

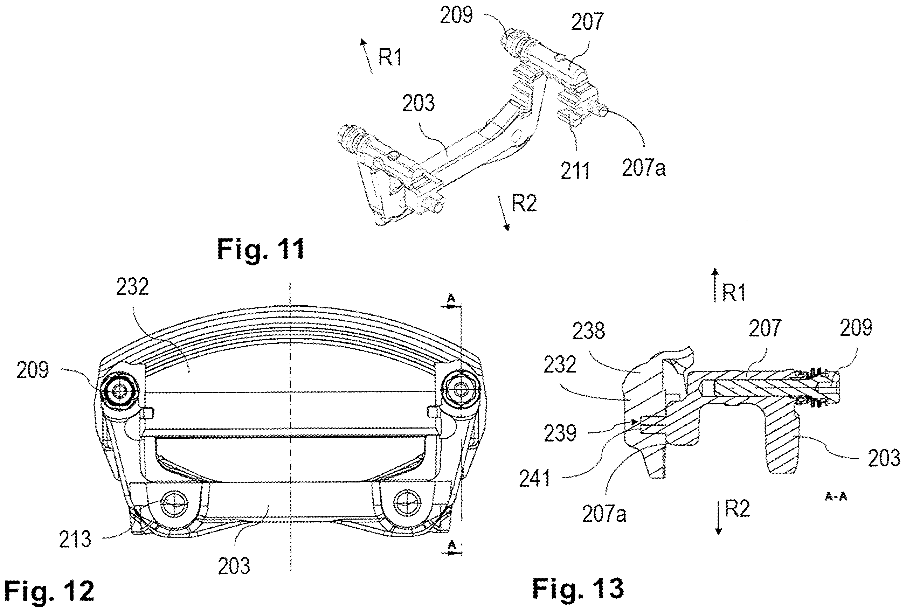

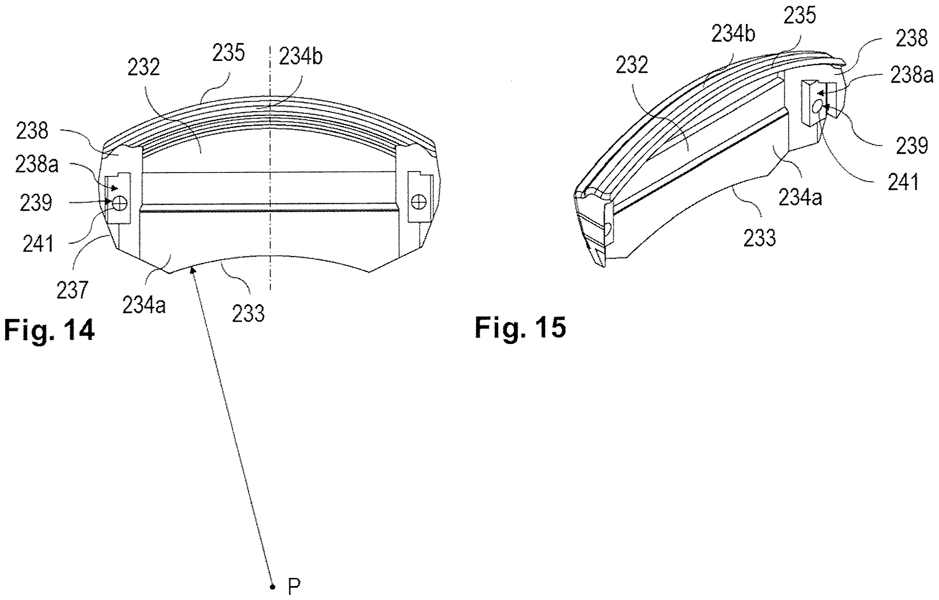

Fig. 8 bis 15 zeigen eine dritte Ausführungsform einer Schutzblende 231. Wie in Fig. 14 und 15 gezeigt, ist der Grundkörper 232 der Schutzblende 231 als kehrschaufelartiger Körper geformt, der sich von einem ersten bogenförmigen Rand 233 zu einem zweiten bogenförmigen Rand 235 mit größerem Radius als der erste bogenförmige Rand 233 bezüglich eines gemeinsamen Ursprungspunkts P erstreckt. Seitenränder 237 verbinden den ersten 233 und den zweiten bogenförmigen Rand 235 und weisen dabei zumindest einen von mehreren Abschnitten auf, der im Wesentlichen entlang einer jeweiligen Geraden durch den gemeinsamen Ursprungspunkt P verläuft. Selbstverständlich kann auf einen solchen Abschnitt auch verzichtet werden, was aber die Fertigung des Grundkörpers 232 aufgrund zusätzlicher Bearbeitungsschritte aufwendiger machen kann. Um Verletzungen bei der Handhabung der Schutzblende 231 vorzubeugen, sind alle Übergänge zwischen den benachbarten Rändern 233, 235, 237 sowie innerhalb dieser in einem stumpfen Winkel geformt oder zumindest abgerundet. Vom ersten bogenförmigen Rand 233 zu dem zweiten bogenförmigen Rand 235 erstreckt sich die Schutzblende 231 im Wesentlichen entlang eines abgestuften Abschnitts 234a und eines gewellten Abschnitts 234b. Der abgestufte Abschnitt 234a hat auf einer Innenseite des Grundkörpers 232 zur entgegengesetzten Außenseite vorhandene Abstufungen, die entlang einer Haupterstreckungsrichtung des Grundkörpers 232 verlaufen. An diesem abgestuften Abschnitt 234a schließt der gewellte Abschnitt 234b nahtlos an. Der gewellte Abschnitt 234b steht von dem abgestuften Abschnitt 234a in zur Abstufungsrichtung des abgestuften Abschnitts 234a entgegengesetzten Richtung ab, sodass er die Rückwand des kehrschaufelartigen Körpers bildet. Die beiden Seitenwände 238 des kehrschaufelartigen Körpers sind als blockartige Gebilde von einem Bereich der Seitenränder 237 gebildet und erstrecken sich in einer Richtung aufeinander zu, wobei sie den abgestuften Abschnitt 234a zwischen sich begrenzen. Darüber hinaus stehen die Seitenwände 238 von dem abgestuften Abschnitt 234a in zur Abstufungsrichtung des abgestuften Abschnitts 234a entgegengesetzten Richtung weniger ab als der gewellte Abschnitt 234b. Jede der Seitenwände 238 weist einen Montageabschnitt 238a auf. Dieser Montageabschnitt 238a stellt eine ebene Fläche dar, die dem abgestuften Abschnitt 234a abgewandt ist und von der jeweiligen Seitenwand 238 an zwei im rechten Winkel zueinander stehenden Seiten begrenzt ist. Hier ist diese Begrenzung zum einen in einer zur Haupterstreckungsrichtung des abgestuften Abschnitts 234a parallelen Richtung, zum anderen in einer dazu senkrechten Richtung. Beide Montageabschnitte 238a verlaufen in derselben Ebene. Innerhalb des Montageabschnitts 238a ist ein Sackloch 241 als Befestigungseinrichtung 239 vorhanden, siehe Fig. 13.

Obige Schutzblende 231 ist hier ausschließlich an den Brückenstreben 207 angebracht, die im Gegensatz zu den beiden vorherigen Ausführungsformen an ihrem der ersten Verbindungsstrebe 203 entgegengesetzten Ende Bremsbelagführungsschächte 211 haben, sodass auf die zweite Verbindungsstrebe verzichtet werden kann, siehe Fig. 11. Selbstverständlich wäre die nachfolgend beschriebene Ausführungsform ohne weiteres auch mit einer zweiten Verbindungsstrebe gemäß den vorherigen Ausführungsformen realisierbar. Auf Höhe, d.h. in Richtung R1 bzw. Richtung R2, dieser Bremsbelagführungsschächte 211 und in einer Ebene mit der Haupterstreckungsrichtung der Brückenstreben 207 steht an jeder Brückenstrebe 207 jeweils ein Befestigungszapfen 207a als Befestigungsstruktur in einer zur ersten Verbindungsstrebe 203 entgegengesetzten Richtung vor. Die zylindrischen Befestigungszapfen 207a haben eine Rillierung und/oder Rändelung an ihren Mantelflächen. Dabei haben die Befestigungszapfen 207a einen im Vergleich zum Durchmesser des Sacklochs 241 geringfügig größeren Durchmesser. Die Schutzblende 231 kann so auf den Bremsträger 200 aufgesteckt werden, wobei eine Relativbewegung der Schutzblende 231 zum Bremsträger 200 aufgrund des Formschlusses in alle Richtungen bis auf in einer zu den Richtungen R1, R2 senkrechten Richtungen von der ersten Verbindungsstrebe 205 weg entlang einer zur Erstreckungsrichtung der Brückenstreben 207 verlaufenden Parallelen verhindert wird. Eine Relativbewegung in letztere Richtung verhindert der Reibschluss zwischen Befestigungszapfen 207a und Sackloch 241. Der Reibschluss kann dabei vorteilhafterweise verstärkt werden, indem ein Abstand zwischen dem Sackloch 241 und dem elastischen gewellten Abschnitt 234b der Schutzblende 231 kleiner ist als ein Abstand zwischen dem Befestigungszapfen 207a und einem in Richtung R1 oberen Rand der Brückenstrebe 207, sodass zum Aufstecken der Schutzblende 231 auf den Bremsträger 200 der gewellte Abschnitt 234b von dem Sackloch 241 weg ausgelenkt werden muss. Dadurch herrscht im aufgesteckten Zustand eine aufgrund der Überdeckung des Bremsträgers 200 durch die Schutzblende 231 in senkrechter Richtung zur Aufsteckrichtung der Schutzblende 231 in den Bremsträger wirkende Vorspannkraft. Der dadurch bewirkte Presssitz sichert die Schutzblende 231 am Bremsträger 200.

Die Montage obiger Schutzblende 231 erfolgt dabei durch Aufdrücken der Sacklöcher 239 auf die Befestigungszapfen 207a, wozu der gewellte Abschnitt 234b von dem Bremsträger 200 ausgelenkt und vorgespannt wird.

### Vierte Ausführungsform

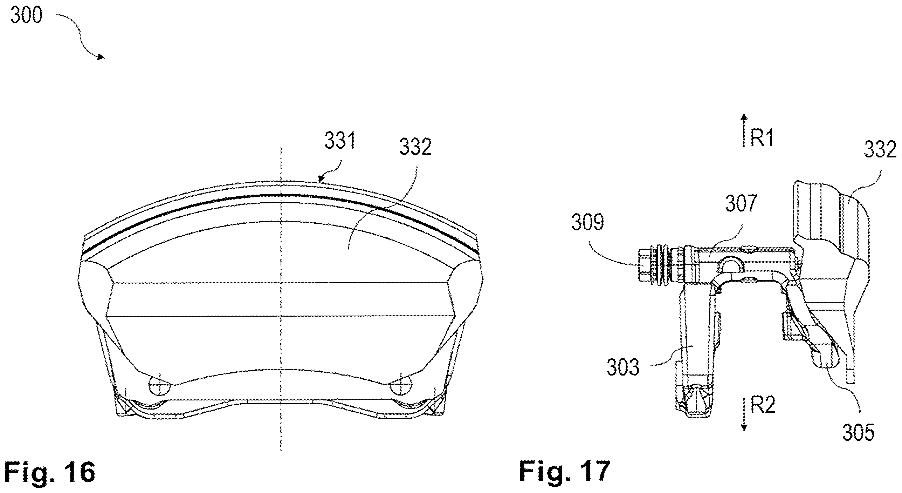

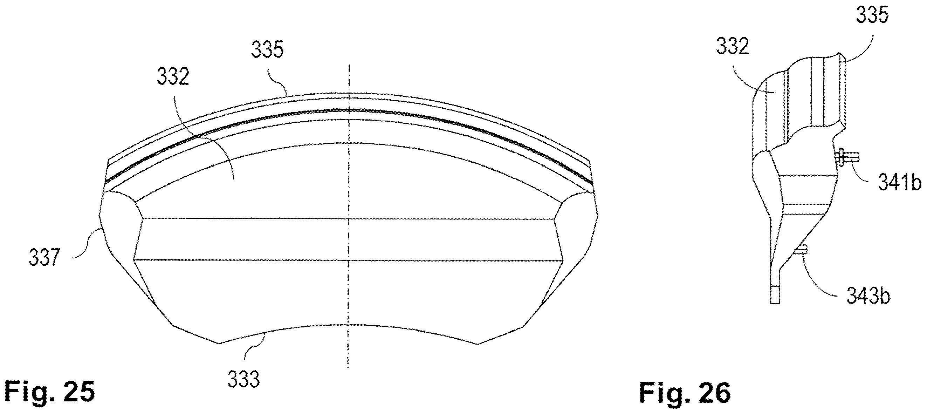

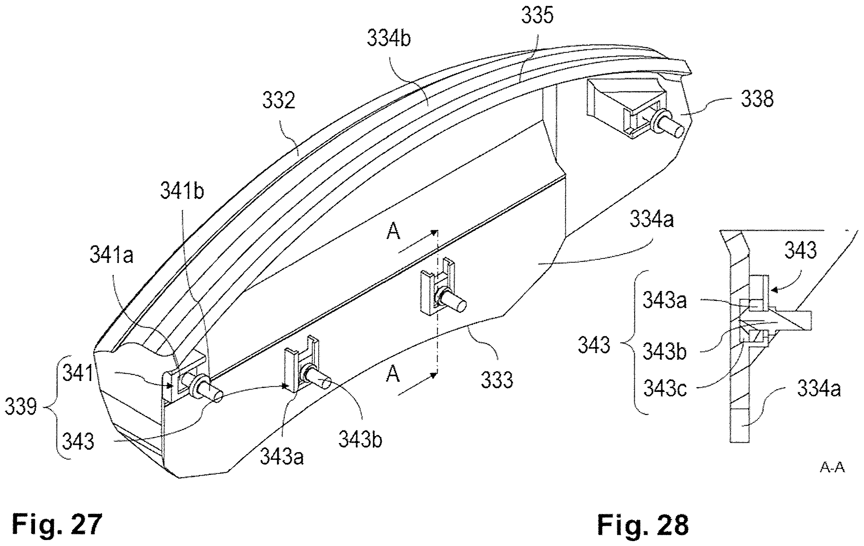

Fig. 16 bis 28 zeigen eine vierte Ausführungsform einer Schutzblende 331. Wie in Fig. 25 bis 27 gezeigt, entspricht die Schutzblende 331 größtenteils der vorherigen Ausführungsform. Die Schutzblende 331 unterscheidet sich insbesondere bezüglich ihrer Befestigungseinrichtung 339, die vier gleichartige, schachtförmige Führungseinrichtungen 341, 343 aufweist. Diese Führungseinrichtungen 341, 343 erstrecken sich entlang dem Grundkörper 332 der Schutzblende 331 und symmetrisch zu einer zwischen den Seitenrändern 337 des Grundkörpers 332 verlaufenden Mitte. Dabei verlaufen die oberen beiden Führungseinrichtungen 341 entlang einer senkrecht zur Mitte des Grundkörpers 332 verlaufenden Geraden und dem zweiten bogenförmigen Rand 135 näher als die unteren beiden Führungseinrichtungen 343, die parallel zueinander von der Mitte des Grundkörpers 332 beabstandet sind. Dabei sind die oberen beiden Führungseinrichtungen 341 in einem größeren Abstand zueinander angeordnet als die unteren beiden Führungseinrichtungen 343. Die Führungseinrichtungen 341, 343 sind schachtförmig geformt, wobei sie zwei Öffnungen haben. Die erste Öffnung ist im Wesentlichen senkrecht zu einer Haupterstreckungsebene des Grundkörpers 332 gerichtet, während die zweite Öffnung entlang der Haupterstreckungsebene des Grundkörpers 332 gerichtet ist. Dabei unterscheiden sich die Führungseinrichtungen 341, 343 darin voneinander, dass die oberen beiden Führungseinrichtungen 341 mit ihren zweiten Öffnungen einander zugewandt sind, während die unteren beiden Führungseinrichtungen 343 mit ihren zweiten Öffnungen dem zweiten bogenförmigen Rand 335 bzw. dem gewellten Abschnitt 334b zugewandt sind, siehe Fig. 27. Innerhalb dieser Führungseinrichtungen 341, 343 befinden sich von und zu den zweiten Öffnungen verschiebbare quaderförmige Befestigungsaufnahmen 341a, 343a, die eine zur Verschiebungsrichtung sowie zur ersten Öffnung senkrechte Durchgangsbohrung haben. In dieser Durchgangsbohrung der Befestigungsaufnahmen 341a, 343a steckt ein zylinderförmiger Stift 341b, 343b mit einem in seiner Erstreckungsrichtung in der Mitte sowie an einem Ende befindlichen ringförmigen Vorsprung größeren Durchmessers. Der Vorsprung in der Stiftmitte ist zylindrisch, während der Vorsprung an dem einen Stiftende konisch mit zum Stiftende geringer werdendem Durchmesser ist. Auf diese Weise ist der Stift 341b, 343b schnappnietartig ausgebildet. Das konische Stiftende befindet sich dabei in einer im Grundkörper 332 unterhalb der Aufnahmebereiche 341, 343 vorhandenen als Sackloch ausgebildeten Bohrung 341c, 343c, die einen größeren Durchmesser als das konische Ende des Stifts 341b, 343b hat. Somit lassen sich die Befestigungsaufnahmen 341a, 343a zusammen mit den darin befindlichen Stiften 341b, 343b innerhalb der Führungseinrichtungen 341, 343 begrenzt von den Bohrungen 341c, 343c bewegen, wobei die Stifte 341b, 343b aus den ersten Öffnungen vorstehen.

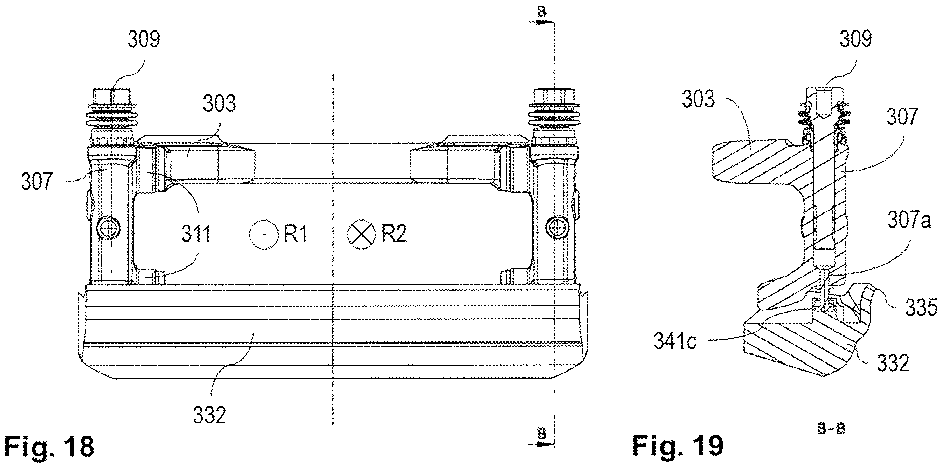

Obige Schutzblende 331 ist mit den oberen beiden Führungseinrichtungen 341 an einem Ende der Brückenstreben 307 und mit den unteren beiden Führungseinrichtungen 343 an der zweiten Verbindungsstrebe 305 des Bremsträgers 300 angebracht. Dabei haben die Brückenstreben 307 an ihrem der ersten Verbindungsstrebe 303 entgegengesetzten Ende Befestigungsbohrungen 307a, die sich entlang der Achse der Bremssattelführung 309 erstrecken und in den Aufnahmebohrungen in den Brückenstreben 307 münden, siehe Fig. 19. Ebenso hat die zweite Verbindungsstrebe 305 in ihrem mittleren Abschnitt derartige Befestigungsbohrungen 305a, die ebenso wie die Befestigungsbohrungen 307a in den Brückenstreben 307 auch als Sacklöcher ausgebildet sein können. Zur Vereinfachung der Montage können diese Befestigungsbohrungen 307a, 305a an der zweiten Verbindungsstrebe 305 sowie den Brückenstreben 307 Einführfasen haben.

Die Montage obiger Schutzblende 331 erfolgt dabei mit den unteren Führungseinrichtungen 343 beginnend, welche in die entsprechenden Befestigungsbohrungen 305a an der zweiten Verbindungsstrebe 305 gesteckt werden, und weiter mit den oberen Führungseinrichtungen 341, die in die entsprechenden Befestigungsbohrungen 307a an den Brückenstreben 307 gesteckt werden. Dabei wird die Montage dadurch vereinfacht, dass die Stifte 343b samt Befestigungsaufnahmen 341a, 343a innerhalb der Führungseinrichtungen 341, 343 begrenzt verschiebbar und vorzugsweise kippbar sind.

### Fünfte Ausführungsform

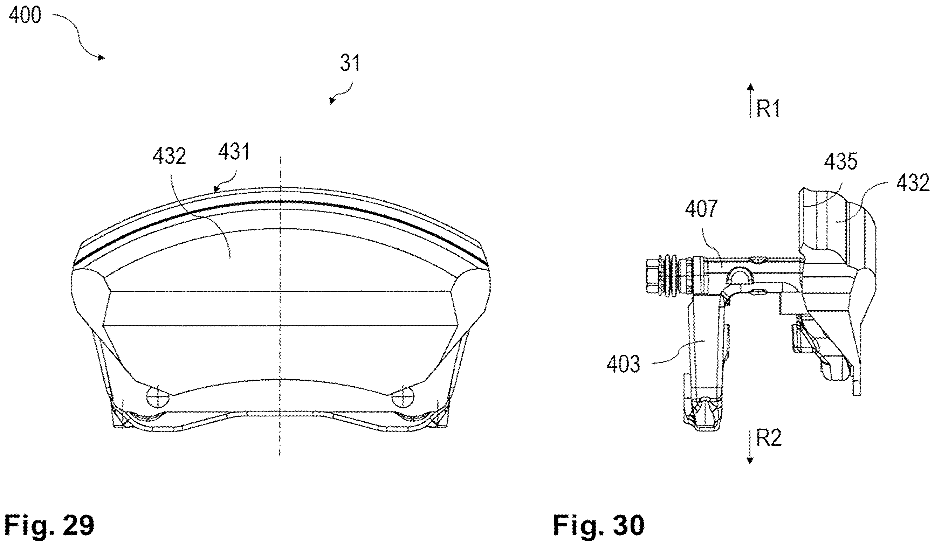

Fig. 29 bis 35 zeigen eine fünfte Ausführungsform einer Schutzblende 431. Wie in Fig. 29 bis 30 gezeigt, entspricht die Schutzblende 431 größtenteils der vorherigen Ausführungsform. Die Schutzblende 431 unterscheidet sich insbesondere bezüglich ihrer Befestigungseinrichtung 439, die drei gleichartige J-förmige Befestigungsfedern 441, 443 aufweist. Diese unterscheiden sich von den J-förmigen Befestigungsfedern 241, 243 der zweiten Ausführungsform darin, dass deren hakenförmiger Endabschnitt eckig und nicht abgerundet ist. Dabei sind die oberen beiden Befestigungsfedern 441, 443 dieser Ausführungsform ebenfalls mit der Öffnung ihres hackenförmigen Endabschnitts einander zugewandt, wohingegen die untere J-förmige Befestigungsfeder 443 mittig zwischen den beiden oberen Befestigungsfedern 441 und näher zum ersten bogenförmigen Rand 433 angeordnet ist sowie mit der Öffnung ihres hackenförmigen Endabschnitts dem ersten bogenförmigen Rand 433 zugewandt ist.

Selbstverständlich können die Befestigungsfedern 441, 443 bezüglich der Ausrichtung der Öffnung ihrer hackenförmigen Endabschnitte andersherum sein, solange mindestens eine der Befestigungsfedern 441, 443 in eine andere Richtung ausgerichtet ist als die anderen Befestigungsfedern 441, 443. Des Weiteren können die Befestigungsfedern 441, 443 auch hier aus dem Grundkörper 432 der Schutzblende 431 ausgeschnitten und gebogen sein.

Obige Schutzblende 431 ist auch hier ausschließlich an der zweiten Verbindungsstrebe 405 des Bremsträgers 400 angebracht. Die Befestigungseinrichtung 439 ist dabei derart ausgebildet, dass die oberen Befestigungsfedern 441 die aufsteigenden Abschnitte der zweiten Verbindungsstrebe 405 unterhalb der Brückenstreben 407 im Anschlag an diese von außen umgreifen, während die untere Befestigungsfeder 443 einen mittleren Abschnitt der Verbindungsstrebe in Richtung R2 umgreift. Auf diese Weise verhindern die untere Befestigungsfeder 443 und der Anschlag der oberen Befestigungsfedern 441 an den Brückenstreben 407 eine Relativbewegung der Schutzblende 431 zum Bremsträger 400 in der Richtung R1 sowie in der Richtung R2. Des Weiteren verhindert jede der Befestigungsfedern 441, 443 eine Relativbewegung der Schutzblende 431 zum Bremsträger 400 in zu den Richtungen R1, R2 senkrechte Richtungen von und zu der zweiten Verbindungsstrebe 405 entlang einer zur Erstreckungsrichtung der Brückenstreben 407 verlaufenden Parallelen.

Die Montage obiger Schutzblende 431 erfolgt dabei mit der unteren Befestigungsfeder 443 beginnend, welche in Richtung R2 auf die Verbindungsstrebe 405 gesteckt wird, und weiter mit den oberen Befestigungsfedern 441, die auf den aufsteigenden Abschnitten der zweiten Verbindungsstrebe 405 unterhalb der Brückenstreben 407 im Anschlag an diese gesteckt werden. Dabei werden die hackenförmigen Abschnitte der oberen Befestigungsfedern 441 manuell so ausgelenkt, dass sie die aufsteigenden Abschnitte umgreifen können.

## Patentansprüche

1. Schutzblende (31; 131; 431) mit einem Grundkörper (32; 132; 432) und einer daran angeordneten Befestigungseinrichtung (39; 139; 439) zum entfernbaren Anbringen an einen Bremsträger (1; 100; 400) einer Schwimmsattelbremse, wobei
die Befestigungseinrichtung (39; 139; 439) mindestens drei Federelemente (41, 43; 141, 143; 441, 443) aufweist,
von denen ein Federelement (41; 141; 443) in einer anderen Auslenkebene auslenkbar ist als die anderen Federelemente (43; 143; 441) und die Auslenkebenen in einem Winkel zueinander stehen,
**dadurch gekennzeichnet, dass**
die Federelemente (41, 43; 141, 143; 441, 443) senkrecht vom Grundkörper (32; 132; 432) abstehen.

2. Schutzblende (31; 131; 431) nach Anspruch 1,
**dadurch gekennzeichnet, dass**
die Auslenkebenen zueinander senkrechten sind, wobei jedes der Federelemente (41, 43; 141, 143; 441, 443) in nur einer dieser Auslenkebenen auslenkbar ist.

3. Schutzblende (31; 131; 431) nach Anspruch 1 oder 2,
**dadurch gekennzeichnet, dass**
die Federelemente (41, 43; 141, 143; 441, 443) symmetrisch zu einer Symmetrieebene des Grundkörpers (32; 132; 432) angeordnet sind.

4. Schutzblende (31) nach einem der Ansprüche 1 bis 3,
**dadurch gekennzeichnet, dass**
ein Federelement (41) V-förmig ausgebildet ist.

5. Schutzblende (31; 131; 431) nach einem der Ansprüche 1 bis 3,
**dadurch gekennzeichnet, dass**
zwei Federelemente (41, 43; 141; 441) einander zugewandt sind.

6. Bremsträger (1; 100; 400) für eine Schwimmsattelbremse mit einer Schutzblende (31; 131; 431) nach einem der Ansprüche 1 bis 5, wobei der Bremsträger (1; 100; 400) U-förmige Verbindungsstreben (3, 5; 103, 105; 403, 405) sowie zwei gerade Brückenstreben (7; 107; 407) aufweist, wobei
sich die Brückenstreben (7; 107; 407) im Wesentlichen parallel zueinander sowie in einem rechten Winkel zu den Verbindungsstreben (3, 5; 103, 105; 403, 405) erstrecken und die beiden Enden der U-förmigen Verbindungsstreben (3, 5; 103, 105; 403, 405) verbinden, sodass beide Verbindungsstreben (3, 5; 103, 105; 403, 405) eine in eine erste Richtung (R1) geöffnete U-Form des Bremsträgers (1; 100; 400) bilden und die beiden Verbindungsstreben (3, 5; 103, 105; 403, 405) zusammen mit den Brückenstreben (7; 107; 407) eine in eine zweite Richtung (R2) geöffnete U-Form des Bremsträgers (1; 100; 400) bilden, welche zur ersten Richtung (R1) entgegengesetzt ist, wobei,
die Schutzblende (31; 131; 431) einseitig an dem Bremsträger (1; 100; 400) senkrecht zur Haupterstreckungsrichtung der Brückenstreben (7; 107; 407) verläuft und an einer der beiden Verbindungsstreben (5; 105; 405) angebracht ist.

7. Bremsträger (1; 100; 400) nach Anspruch 6,
**dadurch gekennzeichnet, dass**
zumindest ein Federelement (41; 141; 443) einen mittleren Abschnitt der Verbindungsstrebe (5; 105; 405) umgreift.

8. Bremsträger (1; 400) nach Anspruch 6 oder 7,
**dadurch gekennzeichnet, dass**
zumindest ein Federelement (41; 443) einen mittleren Abschnitt der Verbindungsstrebe (5; 405) von der zweiten Richtung (R2) umgreift.

9. Bremsträger (100; 400) nach einem der Ansprüche 6 bis 8,
**dadurch gekennzeichnet, dass**
zumindest ein Federelement (141; 441) die Verbindungsstrebe (105; 405) von einer Richtung umgreift, die in einer Ebene parallel zu einer zur Haupterstreckungsebene der Verbindungsstrebe (105; 405) verlaufenden Ebene liegt.

10. Schwimmsattelbremse mit einem Bremsträger (1; 100; 400) nach einem der Ansprüche 6 bis 9 oder einer Schutzblende (31; 131; 431) nach einem der Ansprüche 1 bis 5.

## Claims

1. A protective shield (31; 131; 431) with a base body (32; 132; 432) and a fastening device (39; 139; 439) arranged thereon for the removable attachment at a brake carrier (1; 100; 400) of a floating caliper brake, wherein the fastening device (39; 139; 439) comprises at least three spring elements (41, 43; 141, 143; 441, 443),
of which one spring element (41; 141; 443) is deflectable in another deflection plane than the other spring elements (43; 143; 441), and the deflection planes are at an angle to each other,
**characterised in that** the spring elements (41, 43; 141, 143; 441, 443) are protruding perpendicularly from the base body (32; 132; 432).

2. The protective shield (31; 131; 431) according to Claim 1,
**characterised in that**
the deflection planes are perpendicular to each other, wherein each of the spring elements (41, 43; 141, 143; 441, 443) is deflectable in only one of these deflection planes.

3. The protective shield (31; 131; 431) according to Claim 1 or 2,
**characterised in that**
the spring elements (41, 43; 141, 143; 441, 443) are arranged symmetrically to a symmetry plane of the base body (32; 132; 432).

4. The protective shield (31) according to any of Claims 1 to 3,
**characterised in that**
one spring element (41) is formed V-shaped.

5. The protective shield (31; 131; 431) according to any of Claims 1 to 3,
**characterised in that**
two spring elements (41, 43; 141; 441) are facing each other.

6. A brake carrier (1; 100; 400) for a floating caliper brake with a protective shield (31; 131; 431) according to any of Claims 1 to 5, wherein the brake carrier (1; 100; 400) comprises U-shaped connecting braces (3, 105; 103, 105; 403, 405) as well as two bridge braces (7; 107; 407), wherein
the bridge braces (7; 107; 407) extend essentially in parallel to each other as well as at a right angle to the connecting braces (3, 5; 103, 105; 403, 405), and connect the two ends of the U-shaped connecting braces (3, 5; 103, 105; 403, 405) so that both connecting braces (3, 105; 103, 105; 403, 405) form a U-shape of the brake carrier (1; 100; 400), which is open in a first direction, and the two connecting braces (3, 5; 103, 105; 403, 405) together with the bridge braces (7; 107; 407) form a U-shape of the brake carrier (1; 100; 400), which is open in a second direction which is opposite to the first direction, wherein
the protective shield (31; 131; 431) extends on one side at the brake carrier (1; 100; 400) perpendicularly to the main direction of extension of the bridge braces (7; 107; 407) and is attached at one of the two connecting braces (5; 105; 405).

7. The brake carrier (1; 100; 400) according to Claim 6,
**characterised in that**
at least one spring element (41; 141; 443) encompasses a central portion of the connecting brace (5; 105; 405).

8. The brake carrier (1; 400) according to Claim 6 or 7,
**characterised in that**
at least one spring element (41; 443) encompasses a central portion of the connecting brace (5; 405) from the second direction.

9. The brake carrier (100; 400) according to any of Claims 6 to 8,
**characterised in that**
at least one spring element (141; 441) encompasses the connecting brace (105; 405) from the direction which lies in a plane extending in parallel to a main extension plane of the connecting brace (105; 405).

10. A floating caliper brake with a brake carrier (1; 100; 400) according to any of Claims 6 to 9 or with a protective shield (31; 131; 431) according to any of Claims 1 to 5.

## Revendications

1. Ecran de protection (31; 131; 431) comprenant un corps de base (32; 132; 432) et un dispositif de fixation (39; 139; 439) disposé sur ce dernier et destiné à être monté de manière amovible sur un support de frein (1; 100; 400) d'un frein à étrier flottant, ledit dispositif de fixation (39; 139; 439) présentant au moins trois éléments formant ressort (41, 43; 141, 143; 441, 443),
dont un élément formant ressort (41; 141; 443) peut être dévié dans un plan de déviation autre que celui des autres élément ressort (43; 141, 143; 441), les plans de déviation formant un angle entre eux,
**caractérisé en ce que** les éléments formant ressort 41, 43; 141, 143; 441, 443) font perpendiculairement saillie du corps de base (32; 132; 432).

2. Ecran de protection (31; 131; 431) selon la revendication 1,
**caractérisé en ce que**
les plans de déviation sont perpendiculaires les uns par rapport aux autres, chacun des éléments formant ressort (41, 43; 141, 143; 441, 443) ne pouvant être dévié que dans l'un de ces plans de déviation.

3. Ecran de protection (31; 131; 431) selon la revendication 1 ou 2,
**caractérisé en ce que**
les éléments formant ressort (41, 43; 141, 143; 441, 443) sont disposés symétriquement par rapport à un plan de symétrie du corps de base (32; 132; 432).

4. Ecran de protection (31) selon l'une des revendications 1 à 3,
**caractérisé en ce que**
un élément formant ressort (41) est réalisé en forme de V.

5. Ecran de protection (31; 131; 431) selon l'une des revendications 1 à 3,
**caractérisé en ce que**
deux éléments formant ressort (41, 43; 141, 441) sont tournés l'un vers l'autre.

6. Support de frein (1; 100; 400) pour un frein à étrier flottant doté d'un écran de protection (31; 131; 431) selon l'une des revendications 1 à 5, ledit support de frein (1; 100; 400) présentant des entretoises en forme de U (3, 5; 103, 105; 403, 405) ainsi que deux pontets rectilignes (7; 107; 407),
lesdits pontets (7; 107; 407) s'étendant de manière sensiblement parallèle l'un par rapport à l'autre et de manière à former un angle droit avec les entretoises (3, 5; 103, 105; 403, 405) et reliant les deux extrémités des entretoises en forme de U (3, 5; 103, 105; 403, 405) si bien que les deux entretoises (3, 5; 103, 105; 403, 405) constituent une forme en U ouverte dans une première direction (R1) du support de frein (1; 100; 400), et les deux entretoises (3, 5; 103, 105; 403, 405), conjointement avec les pontets (7; 107; 407), une forme en U ouverte dans une deuxième direction (R2) du support de frein (1; 100; 400), laquelle deuxième direction est opposée à la première direction (R1),
l'écran de protection (31; 131; 431) s'étendant sur un côté sur le support de frein (1; 100; 400) perpendiculairement à la direction d'étendue principale des pontets (7; 107; 407) et étant monté sur l'une des deux entretoises (5; 105; 405).

7. Support de frein (1; 100; 400) selon la revendication 6,
**caractérisé en ce que**
ledit au moins un élément formant ressort (41; 141; 443) est en prise autour d'une partie médiane de l'entretoise (5; 105; 405).

8. Support de frein (1; 400) selon la revendication 6 ou 7,
**caractérisé en ce que**
au moins un élément formant ressort (41; 443) est en prise depuis la deuxième direction (R2) autour d'une partie médiane de l'entretoise (5; 405).

9. Support de frein (100; 400) selon l'une des revendications 6 à 8,
**caractérisé en ce que**
au moins un élément formant ressort (141; 441) est en prise autour de l'entretoise (5; 405) depuis une direction (R2) qui se situe dans un plan parallèle au plan d'étendue principale de l'entretoise (105; 405).

10. Frein à étrier flottant équipé d'un support de frein (1; 100; 400) selon l'une des revendications 6 à 9 ou d'un écran de protection (31; 131; 431) selon l'une des revendications 1 à 5.
